# EUROPEAN PATENT SPECIFICATION

(11) **EP 2 454 482 B1**
(45) Date of publication and mention of the grant of the patent: **13.05.2020**
(21) Application number: 10800395.5
(22) Date of filing: 12.07.2010
(51) Int. Cl.: F04B 13/00, F04B 15/04, F04B 43/00, F04B 9/127

(54) **DISPENSING PUMP**
DOSIERPUMPE
POMPE DE DOSAGE

(30) Priority: 13.07.2009 US 225199 P
(43) Date of publication of application: 23.05.2012
(73) Proprietor: Saint-Gobain Performance Plastics Corporation, Solon, OH 44139 (US)
(72) Inventor: NGUYEN, Hy, Upland CA 91786 (US)
(74) Representative: Zimmermann & Partner Patentanwälte mbB
(86) International application number: PCT/US2010/041752
(87) International publication number: WO 2011/008715

(56) References cited:
- EP-A2- 0 882 921
- EP-A2- 0 950 815
- JP-A- 59 122 789
- JP-A- 59 122 790
- JP-A- 60 081 486
- JP-U- 61 003 985
- US-A- 4 322 201
- US-B1- 6 568 926

## Description

### FIELD OF THE DISCLOSURE

This disclosure, in general, relates to dispensing pumps and methods for their use.

### BACKGROUND

Various industries rely on the dispensing of small volumes of fluid. In industries such as the semiconductor industry, small volumes of highly corrosive components are dispensed during processing of semiconductor devices. In industries such as the pharmaceutical industry, small volumes of solutions including concentrated ingredients are dispensed.

Prior art document EP-0950815-A2 discloses a pump for corrosive chemical fluids with the features of the preamble of claim 1.

### BRIEF DESCRIPTION OF THE DRAWINGS

The present disclosure may be better understood, and its numerous features and advantages made apparent to those skilled in the art by referencing the accompanying drawings.
FIG. 1 includes an illustration of a cross-section of an exemplary dispensing pump.
FIG. 2 includes an illustration of a top view of an exemplary dispensing pump.
FIG. 3 includes an illustration of a perspective view of an exemplary dispensing pump.
FIG. 4 includes an illustration of a cross-section of a portion of an exemplary dispensing pump.

The use of the same reference symbols in different drawings indicates similar or identical items.

### DESCRIPTION OF THE DRAWING(S)

In a particular embodiment, a pump includes a pump body defining a fluid chamber and inlet and outlet ports. When a poppet disposed within the fluid chamber moves in a first direction, fluid is drawn through an inlet check valve coupled with the inlet port, and when it moves in a second direction, fluid is pushed out of the fluid chamber and through an outlet check valve. The inlet check valve can be directly connected to the pump body in line with the inlet port defined by the pump body. The outlet check valve can be directly connected to the pump body in line with the outlet port of the pump body. A piston is attached to the poppet and is disposed within a piston chamber. In response to actuating gas, such as air, the piston moves, actuating the poppet and causing fluid to flow within the fluid chamber. In addition, the pump can include a dispensed volume control, a piston rate control, and access ports to various volumes within the piston chamber to detect leakage.

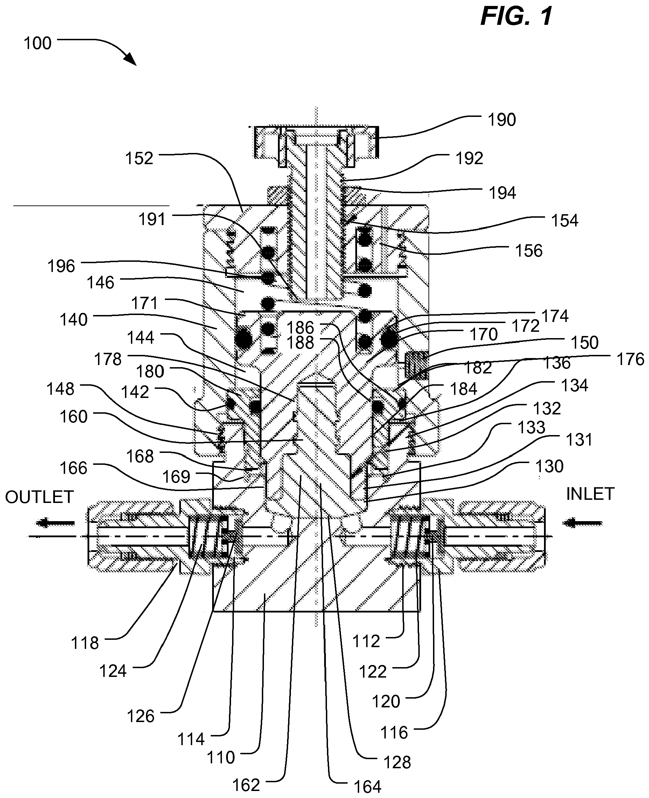

In an exemplary embodiment, FIG. 1 includes an illustration of a dispensing pump 100 in an empty configuration. The dispensing pump 100 includes a pump body 110 connected to a piston housing 140. The pump body 110 defines a fluid chamber 130 circumscribed by inner annular walls 131 and 132. In addition, the pump body 110 defines an inlet port 112 and an outlet port 114. A piston assembly 160 is disposed within a piston chamber 146 defined by piston housing 140 and within the fluid chamber 130 of the pump body 110. In addition, a check valve 116 is directly connected to the fluid inlet port 112, and a check valve 118 is directly connected to the fluid outlet port 114. When the piston assembly 160 moves away from the seat 128 of the pump body 110, the check valve 116 opens permitting fluid to be drawn into the fluid chamber 130 and the check valve 118 is in a closed position. When the piston assembly 160 is moved toward the seat 128, fluid within the fluid chamber 130 increases in pressure to open the check valve 118 and close the check valve 116. Accordingly, fluid within the fluid chamber 130 is pushed out of the outlet port 114 of the pump body 110.

The pump body 110 includes a fluid chamber 130 defined by inner annular wall 131, inner annular wall 132, and the seat 128 disposed at an end of the fluid chamber 130. An inlet port 112 is defined in fluid communication with the fluid chamber 130. A check valve 116 is directly connected to and has fluid communication with the inlet port 112 and the fluid cavity 130. In particular, the check valve 116 directly contacts the pump body 110 without intervening tubes or connectors. The inlet check valve 116 includes an inlet check valve piston assembly 120 connected to a motivation component 122, such as a spring. The inlet check valve piston assembly 120 and the motivation component 122 are configured to permit fluid to enter the inlet port 112 and the fluid chamber 130 but not to exit the fluid chamber 130 via the fluid inlet port 112. The outlet port 114 is in fluid communication with the fluid chamber 130. In addition, a check valve 118 is directly connected to the fluid outlet port 114, such as without intervening tubes or connectors. The outlet check valve 118 includes an outlet check valve piston assembly 126 and motivation component 124 configured to permit fluid to flow from the fluid chamber 130, out of the outlet port 114 and through the check valve 118, but not in the opposite direction.

The check valve 116 and the check valve 118 can include components, such as polymer components or metal components. In a particular example, the check valves 116 and 118 include polymer components that can withstand corrosive environments. In a particular example, components of the inlet check valve 116 and the outlet check valve 118 can be formed of a fluoropolymer. In particular, the check valves 116 or 118 can be formed of a fluoropolymer, such as a polytetrafluoroethylene (PTFE) or perfluoroalkoxy (PFA), any blend or copolymer thereof, or any combination thereof.

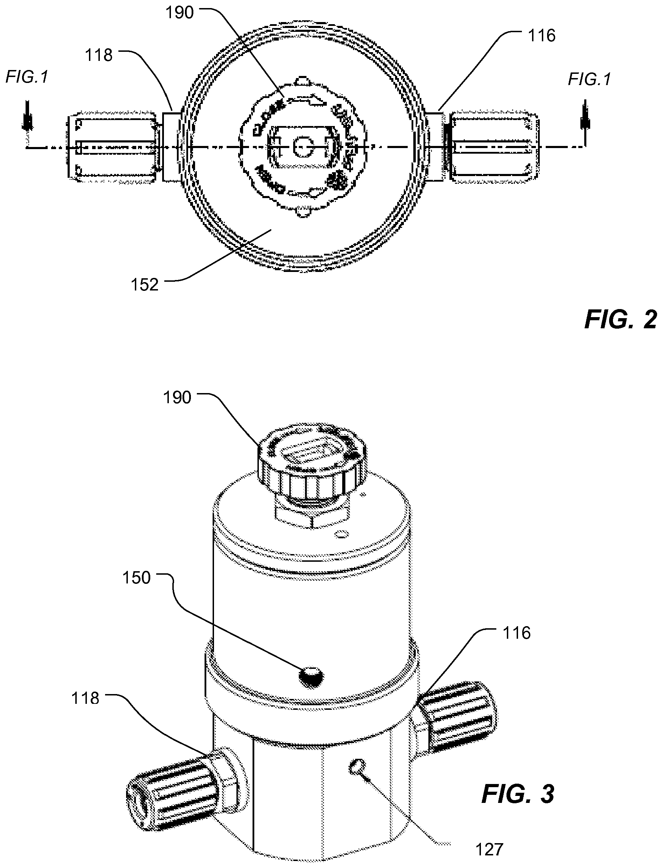

In a particular example, the inlet port 112 and the outlet port 114 are in fluid communication with a seat 128 defined by the pump body 110 at an end of the fluid chamber 130. The seat 128 can extend radially beyond the location at which the fluid inlet and outlet ports 112 and 114 communicate with the fluid chamber 130. The fluid chamber 130 is defined by a first annular wall 131 and a second annular wall 132. The first annular wall 131 is disposed axially closer to the seat 128 than the second annular wall 132. The second annular wall 132 has a greater radial distance from the center line of the pump 100 than the first annular wall 131. In addition, the pump body 110 includes an annular groove 133. As illustrated in FIG. 1, the annular groove 133 is aligned with the annular wall 132 and is configured to engage a tongue 169 of a poppet 162. In addition, the pump body 110 may include a leak detection access 127, as illustrated in FIG. 3.

The pump body 110 can be formed of a polymer or metal material. In a particular example, the pump body 110 is formed of a polymeric material, such as a polymeric material resistant to corrosive solutions. For example, the pump body 110 can be formed of a fluoropolymer. In a particular example, the pump body 110 can be formed of polytetrafluoroethylene (PTFE) material, a PFA material, a blend or copolymer thereof, or any combination thereof.

The pump body 110 is connected to a piston housing 140. For example, the pump body 110 can include a threaded connection 134 at an end 136, which engages a threaded connection 148 of the piston housing 140. The piston housing 140 defines a piston chamber 146 in which a piston assembly 160 is disposed. The piston housing 140 can also include a shoulder 142 to engage a gland 180. In particular, the gland 180 includes a head 182 that is engaged between the piston housing 140 and the pump body 110.

The piston housing 140 also includes an actuation pressure port 150, which is in fluid communication with actuating volume 144. The actuating volume 144 is defined between a flange 171 of the piston assembly 160 and the gland 180. When actuating gas, such as air, is provided to the actuation volume 144, the piston assembly 160 is moved in a direction away from the seat 128 of the pump body 110. When the actuating gas is released from the actuation volume 144, the piston assembly 160 is moved in a direction towards the seat 128 of the pump body 110.

In addition, the dispensing pump 100 includes a casing end 152 coupled to the piston housing 140 at an end of the piston housing 140 opposite the pump body 110. In an example, the casing end 152 can be coupled to the piston chamber 140 using a threaded connection. In addition, the casing end 152 can provide access to the piston chamber 146 for a volume control bolt 190. In an example, the bolt 190 is threaded into a bore 154 of the top 152. The bolt 190 can include fine threads 192.

The gland 180 is an annular structure defining a central bore through which the piston assembly 160 extends. The gland 180 includes a head 182 and an annular arm 184. The head 182 is disposed between the piston housing 140 and the pump housing 110 and can be secured between the two by compression. The annular arm 184 extends along the second chamber wall 132 of the pump housing 110. In addition, the gland 180 includes annular cavities 186 and 188 within which seals can extend annularly in contact with the piston assembly 160 or the piston housing 140. In particular, the gland 180 secures a flange 168 of a poppet 162 against the pump body 110, such as axially between the gland 180 and the pump body 110.

The piston assembly 160 includes a poppet 162 in communication with the fluid chamber 130. The poppet 162 includes a head 164. The head 164 extends to contact the seat 128 of the pump body 110 and into a cavity 178 of the piston 170. In an example, the head 164 is radially coextensive with the seat 128. A diaphragm portion 166 of the poppet 162 extends axially from an edge of the head 164 to a flange 168 that extends radially from the diaphragm portion 166. The flange 168 can be secured between the pump body 110 and the gland 180. Further, the flange 168 can be configured to engage the annular groove 133. For example, the flange 168 can include a tongue 169 that extends within the annular groove 133. The diaphragm portion 166 of the poppet 162 is configured to roll along or rollingly engage an interior surface of the annular arm 184 of the gland 180 in response to movement of the piston 170. In a particular example, the poppet 162 is formed of a polymeric material such as a polymeric material that is resistant to corrosive chemical species. For example, the poppet 162 can be formed of a fluoropolymer, such as a PTFE. In particular, the PTFE can be a high fatigue PTFE, which exhibits 3 times the flexing of conventional PTFE.

The poppet 162 extends and locks into a cavity 178 of the piston 170 and is coupled to the piston 170. At a flanged end 171 of the piston 170 disposed on an opposite end of the piston 170 from the pump housing 110, an annular cavity 172 is disposed in which a seal 174 can be disposed. In addition, the piston 170 can include an annular cavity 176 to engage a motivator 196, such as a spring. The flanged end 171 of the piston 170 defines an actuator volume 144 between the flanged end 171 of the piston 170 and the gland 180 within the piston housing 140.

The volume that is dispensed can be controlled using a volume control including the volume control bolt 190. For example, the bolt 190 can engage, e.g., using a fine-toothed threaded connection 192, the casing end 152 of the pump. When the bolt 190 is engaged and rotated, the terminal end 191 of the bolt 190 can move relative to the pump body 110. As a result, as the piston assembly 160 is moved upwardly by actuating gas within the chamber 144, the extent to which the piston assembly 160 can move is determined based on a positioning of the terminal end 191 of the bolt 190. In other words, the positioning of the terminal end 191 of the bolt 190 determines the stroke length of the piston and thus, the volume of the fluid chamber 130 when in a full configuration. As such, the bolt 190 can be adjusted to increase or decrease the volume that can be dispensed. For example, the system can be configured to dispense a volume of fluid having a maximum value in a range of 5cc to 30cc. For example, the range can be between 5cc and 20cc, such as between 5cc and 15cc, or even a range of 5 cc to 10 cc. The bolt 190 can be moved to set how much of the maximum volume can be dispensed per stroke. For example, in a system having a 10 cc maximum value, the bolt 190 can be set to limit the dispensed volume to a value in the range of 0 cc to 10 cc. Once the bolt 190 is set, a nut 194 can be used to secure the position of the bolt 190 to the casing end 152 of the pump and limit further movement of the bolt 190. As used herein, the pump 100 is in an empty configuration when the poppet head 164 is in contact with the seat 128 and is in a full configuration when the piston assembly 160 is in contact with the bolt 190 or the casing end 152.

FIG. 2 includes an illustration of a top view of an exemplary device. As illustrated in FIG. 2, the inlet check valve 116 and inlet port 112 are in radial alignment with the outlet port 114 and outlet check valve 118. Alternatively, the inlet and outlet ports 112 and 114 and inlet and outlet check valves 116 and 118 can be offset by an amount, such as between 0° and 90° from each other. As further illustrated in FIG. 2, counterclockwise movement of the bolt 190 can increase the volume that can be dispensed from the pump in accordance with a particular embodiment. In such a particular embodiment, clockwise rotation of the piston 190 results in a decrease in the volume that can be dispensed from the pump per stroke.

FIG. 3 includes a perspective view of the exemplary dispensing pump. As illustrated in FIG. 3, access 150 to the piston chamber 146 can be provided through the casing end 152 of the pump.

In operation, the piston assembly 160 is moved in a direction away from the seat 128 of the pump body 110 in response to an actuating gas entering the actuation pressure port 150. The actuating gas can enter actuation volume 144 and actuate the piston 170 to move in a direction towards the casing end 150, stopping once the casing end 152 is reached or a terminal end of the bolt 190 is contacted. As the piston assembly 160 moves, the diaphragm portion 166 of the poppet 162 rolls into contact with an annular arm 184 of the gland 180. In addition, movement of the piston assembly 160 causes a decrease in pressure in the fluid chamber 130, opening the check valve 116 and allowing fluid to flow into the fluid chamber 130. Once an appropriate amount of fluid fills the fluid chamber 130, the actuating gas can be removed from the actuator volume 144. The piston assembly 160 moves in the direction opposite of the casing end 152 moved by the motivator 196. Fluid within the fluid chamber 130 is driven against check valves 116 and 118. The change in pressure causes the inlet check valve 116 to close and the outlet check valve 118 to open, permitting fluid to flow out of the outlet port 114.

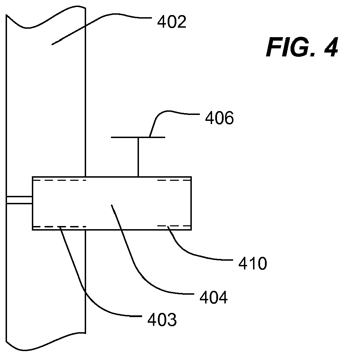

The rate at which the piston assembly 160 moves can be manipulated or controlled based on the rate of actuating gas (e.g., air, N₂) provided to the actuator volume 144. As illustrated in FIG. 4, a piston housing 402 can include an actuation pressure port 403. A piston rate controller 404, such as a needle valve, can be directly connected to the piston housing 402, such as without intervening connectors or tubing. The piston rate controller 404 includes a connection portion 410 to secure the controller 404 to an actuating gas source. In addition, the controller 404 can include an adjustable element 406 to control the volume or rate of actuating gas transferred from the actuating gas source to the actuator volume. For example, the controller 404 can be a needle valve including a handle that when rotated changes the rate of actuating gas that can pass through the controller 404, and thus, the rate at which the piston 170 moves.

In a particular example, the above design provides for an increased life span dispensing pump. Materials can be chosen to form the dispensing pump such that the pump can be useful in ambient temperatures between 0° C and 50° C, such as between 0° C and 40° C. Further, the pump can handle media having a temperature in the range of 5° C to 82° C, such as a range of 5° C to 65° C, or even a range of 5° C to 40° C. Pump actuation can be performed using at least a 4.14 bar (60 psig) actuating gas and the pump can have a maximum setting of 5.52 bar (80 psig). In a particular example, a check valve can be selected which has a low opening pressure, such as not greater than 0.14 bar (2 psig), not greater than 0.07 bar (1 psig), or even not greater than 0.03 bar (0.5 psig). Further, the check valve can seat with a pressure, such as not greater than 0.34 bar (5 psig), not greater than 0.28 bar (4 psig), or even not greater than 0.21 bar (3 psig).

### EXAMPLE

An exemplary pump configured as described above is tested using a cycle time of 3 seconds on and 3 seconds off running continuously. The actuation air pressure is 4.83 bar (70 psig) and the ambient temperature is 22° C. The media being pumped is room temperature water, which is suction lifted from 12 inches and dispensed back into the same flask. The chamber is set to dispense 10 cc water at 4.83 bar (70 psig).

The pump passed the test, performing for at least 500,000 cycles without failure. As such, the pump exhibited unexpected durability and performance.

In a first embodiment, a pump includes a pump body defining a fluid chamber and inlet and outlet ports in fluid communication with the fluid chamber, an inlet check valve directly connected to the inlet port and to permit fluid flow into the inlet port, an outlet check valve directly connected to the outlet port and to permit fluid flow out of the outlet port, a piston housing coupled to the pump body, the piston housing defining a piston chamber, a piston assembly disposed at least partially within the piston chamber and at least partially within the fluid chamber, a gland disposed between a portion of the piston housing and the pump body, and a poppet having a poppet head axially connected to a diaphragm coupled to a poppet flange. An actuating volume of the piston chamber is defined between the flange of the piston and the gland. The piston assembly includes a piston and the poppet connected to the piston in proximity to the pump body. The piston includes a flange at an end of the piston opposite the poppet. The poppet head is connected to the piston. The poppet flange is disposed axially between the gland and the pump body. The diaphragm rollingly engages the annular arm of the gland in response to movement of the piston.

In an example of the first embodiment, the pump further includes a seat disposed at an end of the fluid chamber. The inlet and outlet ports are in fluid communication with the fluid chamber through openings in the seat. The fluid chamber can be circumscribed by first and second inner walls of the pump body. The first inner wall can be disposed axially closer to the seat than the second inner wall and the second inner wall can have a greater radial distance from a center line of the pump than the first inner wall. The gland can include a head disposed between the piston housing and the pump body and can include an annular arm extending along the second inner wall of the pump body. The poppet flange can be disposed between the annular arm of the gland and the pump body.

In a further example of the first embodiment, the flange of the poppet includes a tongue disposed in an annular groove of the pump body aligned with the second inner wall.

In another example of the first embodiment, the pump further includes a casing end connected to the piston housing at an end of the piston housing opposite the pump body. The casing end includes a threaded bore. The pump further includes a volume control that includes a bolt extending through the threaded bore of the casing end. A terminal end of the bolt can contact the piston and limit a stroke length of the piston.

In an additional example of the first embodiment, the pump further includes a piston rate controller in fluid communication with the actuating volume through the piston housing. The piston rate controller can be adjustable to control the rate of actuating gas to enter the actuating volume. The piston rate controller can include a needle valve directly connected to an access port of the piston housing.

In a second embodiment, a pump includes a pump body defining a fluid chamber and inlet and outlet ports in fluid communication with the fluid chamber, an inlet check valve connected to the inlet port and to permit fluid flow into the inlet port, an outlet check valve connected to the outlet port and to permit fluid flow out of the outlet port, and a piston housing coupled to the pump body. The piston housing defines a piston chamber. The pump further includes a piston assembly disposed at least partially within the piston chamber and at least partially within the fluid chamber. The piston assembly includes a piston and a poppet connected to the piston in proximity to the pump body. The piston includes a flange at an end of the piston opposite the poppet. The pump further includes a gland at least partially disposed between a portion of the piston housing and the pump body. An actuating volume of the piston chamber is defined between the flange of the piston and the gland. The pump also includes a piston rate controller in fluid communication with the actuating volume through the piston housing. The piston rate controller is adjustable to control the rate of actuating gas to enter the actuating volume. In addition, the pump includes the poppet having a poppet head axially connected to a diaphragm coupled to a poppet flange. The poppet head is connected to the piston. The poppet flange is disposed axially between the gland and the pump body. The diaphragm is to rollingly engage the gland in response to movement of the piston.

In an example of the second embodiment, the piston rate controller includes a needle valve directly connected to an access port of the piston housing.

In another example of the second embodiment, the gland includes an annular arm extending along an inner wall of the pump body. The flange of the poppet is disposed between the annular arm of the gland and the pump body. The diaphragm is to rollingly engage the annular arm of the gland.

In a third embodiment, a pump includes a pump body defining a fluid chamber and inlet and outlet ports in fluid communication with the fluid chamber. A seat is disposed at an end of the fluid chamber. The inlet and outlet ports are in fluid communication with the fluid chamber through openings in the seat. The seat has a diameter extending radially beyond the openings. The pump further includes an inlet check valve connected to the inlet port and to permit fluid flow into the inlet port, an outlet check valve connected to the outlet port and to permit fluid flow out of the outlet port, a piston housing coupled to the pump body, the piston housing defining a piston chamber, and a piston assembly disposed at least partially within the piston chamber and at least partially within the fluid chamber. The piston assembly includes a piston and a poppet connected to the piston in proximity to the pump body. The piston includes a flange at an end of the piston opposite the poppet. The pump further includes a gland disposed between a portion of the piston housing and the pump body. An actuating volume of the piston chamber is defined between the flange of the piston and the gland. The pump also includes the poppet having a poppet head axially connected to a diaphragm coupled to a poppet flange. The poppet head is connected to the piston and is to contact the seat in an empty position. The diaphragm is to rollingly engage the gland in response to movement of the piston.

In an example of the third embodiment, the poppet head is coextensive with the seat. In another example of the third embodiment, the gland includes an annular arm extending along an inner wall of the pump body. The flange of the poppet is disposed between the annular arm of the gland and the pump body. The diaphragm is to rollingly engage the annular arm of the gland.

In a fourth embodiment, a pump includes a pump body defining a fluid chamber and inlet and outlet ports in fluid communication with the fluid chamber. The fluid chamber is circumscribed by first and second inner walls of the pump body. A seat is disposed at an end of the fluid chamber. The inlet and outlet ports are in fluid communication with the fluid chamber through openings in the seat. The first inner wall is disposed axially closer to the seat than the second inner wall and the second inner wall has a greater radial distance from a center line of the pump than the first inner wall. The pump further includes an inlet check valve directly connected to the inlet port and to permit fluid flow into the inlet port, an outlet check valve directly connected to the outlet port and to permit fluid flow out of the outlet port, and a piston housing coupled to the pump body. The piston housing defines a piston chamber. The pump also includes a casing end connected to the piston housing at an end of the piston housing opposite the pump body. The casing end includes a threaded bore. The pump further includes a piston assembly disposed at least partially within the piston chamber and at least partially within the fluid chamber. The piston assembly includes a piston and a poppet connected to the piston in proximity to the pump body. The piston includes a flange at an end of the piston opposite the poppet. The pump includes a gland including a head disposed between a portion of the piston housing and the pump body and including an annular arm extending along the second inner wall of the pump body. An actuating volume of the piston chamber is defined between the flange of the piston and the head of the gland. The pump also includes a volume control including a bolt extending through the threaded bore of the casing end. A terminal end of the bolt is to contact the piston and limit a stroke length of the piston. The pump further includes a piston rate controller in fluid communication with the actuating volume through the piston housing. The piston rate controller is adjustable to control the rate of actuating gas to enter the actuating volume. The pump also includes the poppet having a poppet head axially connected to a diaphragm coupled to a poppet flange. The poppet head is connected to the piston. The poppet flange is disposed axially between the annular arm of the gland and the pump body. The diaphragm is to rollingly engage the annular arm of the gland in response to movement of the piston.

In a fifth embodiment, a method of dispensing a fluid includes drawing a fluid into a fluid chamber of a pump. The pump includes a pump body defining the fluid chamber and inlet and outlet ports in fluid communication with the fluid chamber, an inlet check valve directly connected to the inlet port and to permit fluid flow into the inlet port, an outlet check valve directly connected to the outlet port and to permit fluid flow out of the outlet port, and a piston housing coupled to the pump body. The piston housing defines a piston chamber. The pump further includes a piston assembly disposed at least partially within the piston chamber and at least partially within the fluid chamber. The piston assembly includes a piston and a poppet connected to the piston in proximity to the pump body. The piston includes a flange at an end of the piston opposite the poppet. The pump further includes a gland disposed between a portion of the piston housing and the pump body. An actuating volume of the piston chamber is defined between the flange of the piston and the gland. The pump includes the poppet having a poppet head axially connected to a diaphragm coupled to a poppet flange. The poppet head is connected to the piston. The poppet flange is disposed axially between the gland and the pump body. The diaphragm is to rollingly engage the annular arm of the gland in response to movement of the piston. The method further includes expelling the fluid from the fluid chamber through the outlet port following drawing.

In an example of the fifth embodiment, drawing includes applying gas to the actuating volume. In another example of the fifth embodiment, expelling includes releasing gas from the actuating volume. In a further example of the fifth embodiment, during drawing, the inlet check valve is in an open position and the outlet check valve is in a closed position, and during expelling, the inlet check valve is in a closed position and the outlet check valve is in an open position.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of invention.

## Claims

1. A pump (100) comprising:
a pump body (110) defining a fluid chamber (130), a seat (128) disposed at an end of the fluid chamber (130), and inlet and outlet ports (112, 114) in fluid communication with the fluid chamber (130);
an inlet check valve (116) directly connected to the inlet port (112) and to permit fluid flow into the inlet port (112);
an outlet check valve (118) directly connected to the outlet port (114) and to permit fluid flow out of the outlet port (114);
a piston housing (140) coupled to the pump body (110), the piston housing (140) defining a piston chamber (146);
a piston assembly (160) disposed at least partially within the piston chamber (146) and at least partially within the fluid chamber (130), the piston assembly (160) including a piston (170) and a poppet (162) connected to the piston (170) in proximity to the pump body (110), the piston (170) including a flange (171) at an end of the piston opposite the poppet (162); and
a gland (180) disposed between a portion of the piston housing (140) and the pump body (110), an actuating volume (144) of the piston chamber being defined between the flange (171) of the piston and the gland (180);
wherein the poppet (162) has a poppet head (164), a diaphragm portion (166), and a poppet flange (168); the poppet head (164) being axially connected to the diaphragm portion (166) coupled to the poppet flange (168); the poppet head (164) being connected to the piston (170); the poppet flange (168) being disposed axially between the gland (180) and the pump body (110); and the diaphragm portion (166) being to rollingly engage the gland (180) in response to movement of the piston (170);
**characterized in that** the poppet head (164) is adapted to extend to contact the seat (128) of the pump body and is coextensive with the seat (128) of the pump body, wherein the seat (128) of the pump body is configured such that the poppet head (164) can contact the seat (128) of the pump body at a point along the longitudinal axis of the piston (170).

2. The pump (100) of claim 1, wherein the inlet and outlet ports (112, 114) are in fluid communication with the fluid chamber (130) through openings in the seat (128).

3. The pump (100) of claim 2, wherein the fluid chamber (130) is circumscribed by first and second inner walls (131, 132) of the pump body (110), the first inner wall (131) disposed axially closer to the seat (128) than the second inner wall (132) and the second inner wall (132) have a greater radial distance from a center line of the pump (100) than the first inner wall (131).

4. The pump (100) of claim 3, wherein the gland (180) includes a head (182) disposed between the piston housing (140) and the pump body (110) and includes an annular arm (184) extending along the second inner wall (132) of the pump body (110), wherein the diaphragm (166) engages the annular arm (184).

5. The pump (100) of claim 4, wherein the poppet flange (168) is disposed between the annular arm (184) of the gland (180) and the pump body (110).

6. The pump (100) of any one of claims 1-5, further comprising:
a casing end (152) connected to the piston housing (140) at an end of the piston housing (140) opposite the pump body (110), the casing end (152) including a threaded bore (154); and
a volume control including a bolt (190) extending through the threaded bore (154) of the casing end (152), a terminal end of the bolt (190) to contact the piston (170) and limit a stroke length of the piston (170).

7. The pump (100) of any one of claims 1-5, further comprising a piston rate controller (404) in fluid communication with the actuating volume (144) through the piston housing (140), the piston rate controller (404) adjustable to control the rate of actuating gas to enter the actuating volume (144).

8. The pump (100) of claim 7, wherein the piston rate controller (404) includes a needle valve directly connected to an access port of the piston housing (140).

9. The pump (100) of claim 1, wherein the seat (128) has a diameter extending radially beyond the openings.

## Patentansprüche

1. Pumpe (100), umfassend:
einen Pumpenkörper (110), der eine Flüssigkeitskammer (130) definiert, einen Sitz (128), der an einem Ende der Flüssigkeitskammer (130) angeordnet ist, und eine Einlass- und eine Auslassöffnung (112, 114) in Flüssigkeitsverbindung mit der Flüssigkeitskammer (130);
ein Einlassrückschlagventil (116), das direkt mit der Einlassöffnung (112) verbunden ist und eine Flüssigkeitsströmung in die Einlassöffnung (112) ermöglicht;
ein Auslassrückschlagventil (118), das direkt mit der Auslassöffnung (114) verbunden ist und eine Flüssigkeitsströmung aus der Auslassöffnung (114) ermöglicht;
ein Kolbengehäuse (140), das mit dem Pumpenkörper (110) verbunden ist, wobei das Kolbengehäuse (140) eine Kolbenkammer (146) definiert;
eine Kolbenanordnung (160), die zumindest teilweise in der Kolbenkammer (146) und zumindest teilweise in der Flüssigkeitskammer (130) angeordnet ist, wobei die Kolbenanordnung (160) einen Kolben (170) und einen Teller(162) beinhaltet, der mit dem Kolben (170) in der Nähe des Pumpenkörpers (110) verbunden ist, wobei der Kolben (170) einen Flansch (171) an einem dem Teller (162) gegenüberliegenden Ende des Kolbens beinhaltet; und
eine Stopfbuchse (180), die zwischen einem Teil des Kolbengehäuses (140) und dem Pumpenkörper (110) angeordnet ist, wobei ein Betätigungsvolumen (144) der Kolbenkammer zwischen dem Flansch (171) des Kolbens und der Stopfbuchse (180) definiert ist;
wobei der Teller (162) einen Tellerkopf (164), einen Membranteil (166) und einen Tellerflansch (168) aufweist;
wobei der Tellerkopf (164) axial mit dem Membranabschnitt (166) verbunden ist, der mit dem Tellerflansch (168) verbunden ist, wobei der Tellerkopf (164) mit dem Kolben (170) verbunden ist;
wobei der Tellerflansch (168) axial zwischen der Stopfbuchse (180) und dem Pumpenkörper (110) angeordnet ist;
und der Membranabschnitt (166) als Reaktion auf die Bewegung des Kolbens (170) rollend in die Stopfbuchse (180) eingreifen soll;
**dadurch gekennzeichnet, dass** der Tellerkopf (164) so ausgelegt ist, dass er sich ausdehnt, um den Sitz (128) des Pumpenkörpers zu berühren, und mit dem Sitz (128) des Pumpenkörpers übereinstimmt, wobei der Sitz (128) des Pumpenkörpers so eingerichtet ist, dass der Tellerkopf (164) den Sitz (128) des Pumpenkörpers an einem Punkt entlang der Längsachse des Kolbens (170) berühren kann.

2. Pumpe (100) nach Anspruch 1, wobei die Einlass- und Auslassöffnung (112, 114) durch Öffnungen im Sitz (128) in Flüssigkeitsverbindung mit der Flüssigkeitskammer (130) stehen.

3. Pumpe (100) nach Anspruch 2, wobei die Flüssigkeitskammer (130) durch die erste und die zweite Innenwand (131, 132) des Pumpenkörpers (110) umschrieben ist, wobei die erste Innenwand (131) axial näher am Sitz angeordnet ist (128) als dir zweite Innenwand (132) und die zweite Innenwand (132) einen größeren radialen Abstand von einer Mittellinie der Pumpe (100) als die erste innere Wand (131) aufweist.

4. Pumpe (100) nach Anspruch 3, wobei die Stopfbuchse (180) einen Kopf (182) beinhaltet, der zwischen dem Kolbengehäuse (140) und dem Pumpenkörper (110) angeordnet ist, und einen Ringarm (184) beinhaltet, der sich entlang der zweiten Innenwand (132) des Pumpenkörpers (110) erstreckt, wobei die Membran (166) in den Ringarm (184) eingreift.

5. Pumpe (100) nach Anspruch 4, wobei der Tellerflansch (168) zwischen dem Ringarm (184) der Stopfbuchse (180) und dem Pumpenkörper (110) angeordnet ist.

6. Pumpe (100) nach einem der Ansprüche 1 bis 5, ferner umfassend:
ein Gehäuseende (152), das mit dem Kolbengehäuse (140) an einem Ende des Kolbengehäuses (140) gegenüber dem Pumpenkörper (110) verbunden ist, wobei das Gehäuseende (152) eine Gewindebohrung (154) beinhaltet; und
eine Volumensteuerung einschließlich eines Bolzens (190), der sich durch die Gewindebohrung (154) des Gehäuseendes (152) erstreckt, wobei ein Endpunkt des Bolzens (190) den Kolben (170) berührt und eine Hublänge des Kolbens (170) begrenzt.

7. Pumpe (100) nach einem der Ansprüche 1 bis 5, ferner umfassend einen Kolbengeschwindigkeitsregler (404) in Flüssigkeitsverbindung mit dem Betätigungsvolumen (144) über das Kolbengehäuse (140), wobei der Kolbengeschwindigkeitsregler (404) einstellbar ist, um die Geschwindigkeit des Betätigungsgases zu steuern, das in das Betätigungsvolumen (144) eintritt.

8. Pumpe (100) nach Anspruch 7, wobei der Kolbengeschwindigkeitsregler (404) ein Nadelventil beinhaltet, das direkt mit einer Zugangsöffnung des Kolbengehäuses (140) verbunden ist.

9. Pumpe (100) nach Anspruch 1, wobei der Sitz (128) einen Durchmesser aufweist, der sich radial über die Öffnungen hinaus erstreckt.

## Revendications

1. Pompe (100) comprenant :
un corps de pompe (110) définissant une chambre à fluide (130), un siège de soupape (128) disposé à une extrémité de la chambre à fluide (130), et des orifices d'entrée et de sortie (112, 114) en communication fluidique avec la chambre à fluide (130) ;
un clapet anti-retour d'entrée (116) directement connecté à l'orifice d'entrée (112) et permettant l'écoulement de fluide dans l'orifice d'entrée (112) ;
un clapet anti-retour de sortie (118) directement connecté à l'orifice de sortie (114) et permettant l'écoulement de fluide hors de l'orifice de sortie (114) ;
un logement de piston (140) couplé au corps de pompe (110), le logement de piston (140) définissant une chambre à piston (146) ;
un ensemble piston (160) disposé au moins partiellement à l'intérieur de la chambre à piston (146) et au moins partiellement à l'intérieur de la chambre à fluide (130),
l'ensemble piston (160) comprenant un piston (170) et un clapet (162) connecté au piston (170) à proximité du corps de pompe (110), le piston (170) comprenant une bride (171) au niveau d'une extrémité du piston opposée au clapet (162) ; et
un presse-étoupe (180) disposé entre une partie du logement de piston (140) et le corps de pompe (110), un volume d'actionnement (144) de la chambre à piston étant défini entre la bride (171) du piston et le presse-étoupe (180) ;
dans laquelle le clapet (162) a une tête de clapet (164), une partie diaphragme (166) et une bride de clapet (168) ;
la tête de clapet (164) étant connectée axialement à la partie diaphragme (166) couplée à la bride de clapet (168) ; la tête de clapet (164) étant connectée au piston (170) ;
la bride de clapet (168) étant disposée axialement entre le presse-étoupe (180) et le corps de pompe (110) ;
et la portion diaphragme (166) étant destinée à engager par roulement le presse-étoupe (180) en réponse au mouvement du piston (170) ;
**caractérisée en ce que** la tête de clapet (164) est conçue pour s'étendre pour entrer en contact avec le siège de soupape (128) du corps de pompe et est coextensive avec le siège de soupape (128) du corps de pompe, dans laquelle le siège de soupape (128) du corps de pompe est configuré de telle sorte que la tête de clapet (164) peut entrer en contact avec le siège de soupape (128) du corps de pompe en un point le long de l'axe longitudinal du piston (170).

2. Pompe (100) selon la revendication 1, dans laquelle les orifices d'entrée et de sortie (112, 114) sont en communication fluidique avec la chambre à fluide (130) à travers des ouvertures dans le siège de soupape (128).

3. Pompe (100) selon la revendication 2, dans laquelle la chambre à fluide (130) est circonscrite par des première et seconde parois internes (131, 132) du corps de pompe (110), la première paroi interne (131) étant disposée axialement plus près du siège de soupape (128) que la seconde paroi interne (132) et la seconde paroi interne (132) ont une distance radiale plus grande par rapport à la ligne centrale de la pompe (100) que la première paroi interne (131).

4. Pompe (100) selon la revendication 3, dans laquelle le presse-étoupe (180) comprend une tête (182) disposée entre le logement de piston (140) et le corps de pompe (110) et comprend un bras annulaire (184) s'étendant le long de la seconde paroi interne (132) du corps de pompe (110), dans laquelle le diaphragme (166) engage le bras annulaire (184).

5. Pompe (100) selon la revendication 4, dans laquelle la bride de clapet (168) est disposée entre le bras annulaire (184) du presse-étoupe (180) et le corps de pompe (110).

6. Pompe (100) selon l'une quelconque des revendications 1 à 5, comprenant en outre :
une extrémité de logement (152) connectée au logement de piston (140) au niveau d'une extrémité du logement de piston (140) opposée au corps de pompe (110), l'extrémité de logement (152) comprenant un alésage fileté (154) ; et
une commande de volume comprenant un boulon (190) s'étendant à travers l'alésage fileté (154) de l'extrémité de logement (152), une extrémité terminale du boulon (190) pour entrer en contact avec le piston (170) et limiter une longueur de course du piston (170).

7. Pompe (100) selon l'une quelconque des revendications 1 à 5, comprenant en outre un régulateur de débit de piston (404) en communication fluidique avec le volume d'actionnement (144) à travers le logement de piston (140), le régulateur de débit de piston (404) étant réglable pour réguler la vitesse du gaz d'actionnement entrant dans le volume d'actionnement (144).

8. Pompe (100) selon la revendication 7, dans laquelle le régulateur de débit de piston (404) comprend une soupape à pointeau directement connectée à un orifice d'accès du logement de piston (140).

9. Pompe (100) selon la revendication 1, dans laquelle le siège de soupape (128) a un diamètre s'étendant radialement au-delà des ouvertures.
